# EUROPÄISCHE PATENTSCHRIFT

(11) **EP 3 695 750 B1**
(45) Veröffentlichungstag und Bekanntmachung des Hinweises auf die Patenterteilung: **17.03.2021**
(21) Anmeldenummer: 19186149.1
(22) Anmeldetag: 12.07.2019
(51) Int. Cl.: A47B 97/00

(54) **STEUERUNGSVERFAHREN ZUM STEUERN EINES MODULAREN MÖBELSYSTEMS**
CONTROL METHOD FOR CONTROLLING A MODULAR FURNITURE SYSTEM
PROCÉDÉ DE COMMANDE PERMETTANT DE COMMANDER UN SYSTÈME DE MEUBLE MODULAIRE

(30) Priorität: 15.02.2019 CH 1972019
(43) Veröffentlichungstag der Anmeldung: 19.08.2020
(73) Patentinhaber: Halter AG, 8005 Zürich (CH)
(72) Erfinder: Valsecchi, Alex Mario, 8006 Zürich (CH)
(74) Vertreter: Naiu, Radu Mircea

(56) Entgegenhaltungen:
- EP-A2- 2 436 352
- WO-A1-2014/108342
- DE-A1-102010 061 207

## Beschreibung

### Hinweis auf verwandte Dokumente

Dieses Dokument beansprucht die Priorität der Schweizerischen Patentanmeldung Nr. 0197/19, eingereicht am 15. Februar 2019, deren gesamten Inhalt hiermit durch Bezug aufgenommen wird.

### Gebiet der Erfindung

Die Erfindung betrifft ein Steuerungsverfahren zum Steuern eines modularen Möbelsystems mit mindestens zwei in einem Raum elektrisch und unabhängig voneinander verfahrbaren Möbelmodulen und ein Computerprogrammprodukt gemäss den unabhängigen Ansprüche.

### Hintergrund

Möbelsysteme mit verschiebbaren Möbelmodulen sind bekannt. Beispielsweise wurden modulare Rollregale als sogenannte Kompaktusanlagen zur Aufbewahrung von Akten entwickelt. Dabei sind mehrere Module hintereinander angeordnet. Um an die Akten eines Moduls zu gelangen, werden die Module manuell verschoben bis ein Zugangsraum zwischen dem interessierenden Modul und dem benachbarten Modul entsteht. Dieses Konzept wurde ferner auf Wohneinheiten übertragen, bei den Möbelmodule vorkonfiguriert sind und durch Verschieben der einzelnen Module verschiedene Zwischenräume geschaffen werden können, die dem einen oder dem anderen Zweck dienen, z.B. ein Wohnraum oder ein Schlafraum. Aufgrund des Komforts wurden Lösungen entwickelt, bei denen die Möbelmodule elektrisch verfahrbar sind, wobei der Benutzer für die Dauer der Fahrt eines Möbelmoduls einen entsprechenden Knopf drücken muss.

Solche modularen Möbelsysteme sind mit dem Augenmerk entwickelt worden, Platz zu sparen, bzw. einen Raum optimal zu nutzen. Ein derartiges Möbelsystem ist beispielsweise aus der WO 2014/108342 A1 bekannt.

### Darstellung der Erfindung

Aufgabe der Erfindung ist die Bereitstellung einer im Hinblick auf den Komfort besseren Steuerung des modularen Möbelsystems.

Die Aufgabe wird mit einem Steuerungsverfahren zum Steuern eines modularen Möbelsystems mit mindestens zwei in einem Raum elektrisch und unabhängig voneinander verfahrbaren Möbelmodulen gelöst. Das Möbelsystem umfasst einen Steuerungsrechner mit mindestens einer Bedienungsschnittstelle für den Benutzer. Jedes Möbelmodul wird mittels eines eigenen Motors elektrisch angetrieben, wobei ein Linearantrieb mit einem entlang einer Wand des Raums befestigten ersten Antriebselement und einem an jedem Möbelmodul befestigten zweiten Antriebselement vorgesehen ist. Das erste Antriebselement wirkt mit dem zweiten Antriebselement zusammen, so dass jedes Möbelmodul individuell mittels des Linearantriebs in Zusammenwirkung mit dem eigenen Motor verfahrbar ist. Jedes Möbelmodul umfasst weiter ein Seilzugsensorsystem zur Positionserkennung. Zwischen Motor und Linearantrieb ist eine mechanische Kraftbegrenzung zwischengeschaltet.

Das Verfahren jedes Möbelmoduls wird unabhängig von den anderen Möbelmodulen mittels des Steuerungsrechners gesteuert und das Möbelmodul wird mittels seines Motors dann verfahren, wenn der Steuerungsrechner einen benutzerseitigen Auslösebefehl empfangen hat. Das betreffende Möbelmodul wird vom Steuerungsrechner ohne weitere benutzerseitige Einwirkung und unter Einbeziehung eines Positionssignals des Seilzugsensorsystems bis zum Erreichen einer Endposition gesteuert. Das betreffende Möbelmodul wird dann mittels des Steuerungsrechners angehalten, wenn eine Stoppbedingung oder eine Notstoppbedingung erfüllt ist.

Ferner wird die Aufgabe der Erfindung mittels eines Computerprogrammprodukts gelöst. Wenn das Computerprogrammprodukt in einem Steuerungsrechner eines modulares Möbelsystems mit mindestens zwei in einem Raum elektrisch und unabhängig voneinander verfahrbaren Möbelmodulen geladen wird, führt es das erfindungsgemässe Verfahren aus.

Es ist bevorzugt dass insbesondere bei einem Notstopp kein nachfolgendes Anfahren irgendeines Möbelmoduls vom Steuerungsrechner erlaubt wird, bis die Notstoppbedingung vom Benutzer aufgehoben wurde.

Das vorliegende Steuerungsverfahren hat den Vorteil dass es für die Dauer des Verfahrens eines Möbelmoduls keine Benutzereinwirkung benötigt. Es muss lediglich am Anfang ein Befehl zum Verfahren gegeben werden. Diese Massnahme steigert den Komfort. Der Benutzer kann sich während der Änderung einer Wohnkonfiguration einer anderen Aufgabe widmen. Daraus folgt ein weiterer Vorteil, nämlich dass das Möbelsystem fernkonfigurierbar ist, da keine Benutzeranwesenheit notwendig ist.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine schematische perspektivische Darstellung des Möbelsystems, und
Fig. 2 eine schematische Schaltungsdarstellung des Möbelsystems aus Fig. 1.

### Wege zur Ausführung der Erfindung

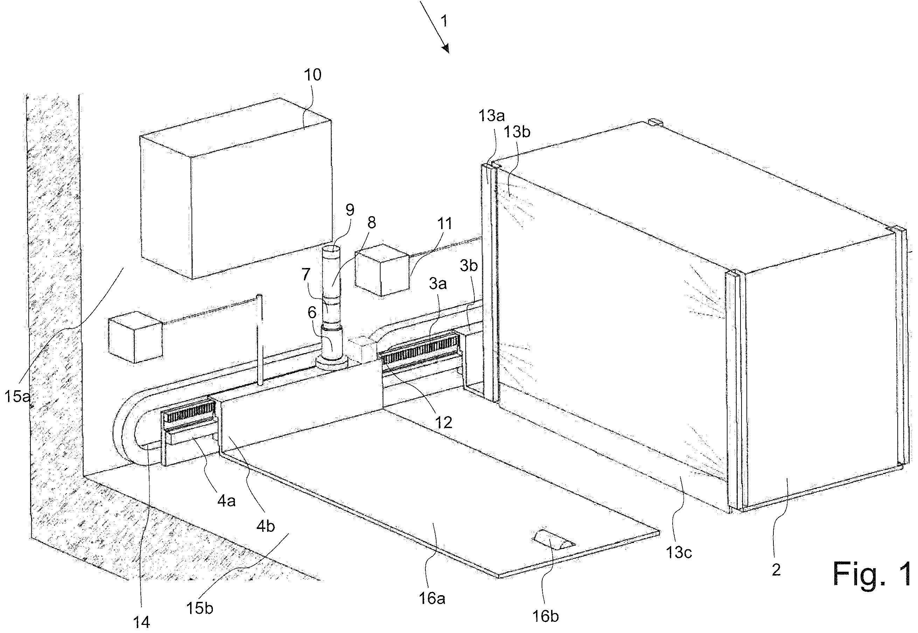

**Fig. 1** stellt perspektivisch ein Möbelsystem 1 dar, das mit dem erfindungsgemässen Verfahren gesteuert wird. Das modulare Möbelsystem 1 hat mehrere in einem Raum elektrisch und unabhängig voneinander verfahrbare Möbelmodule 2, von den in der Figur aus Übersichtlichkeitsgründen nur ein Modul 2 gezeigt ist. Ein weiteres Modul 2 würde auf der Abstützunterlage oder Unterbau 16a angeordnet sein, es ist jedoch nicht gezeigt, um die hinten angeordneten Elemente des Moduls sichtbar zu machen. Im vorliegenden Kontext bedeutet der Begriff "hinten" zur Wand 15a hin.

Wie erwähnt umfasst jedes Möbelmodul 2 einen eigenen, von einem Steuerungsrechner 10 des Möbelsystems 1 gesteuerten Motor 8. Für das modulare Möbelsystem 1 ist ein elektrischer Linearantrieb mit einem entlang der Wand 15a des Raums befestigten ersten Antriebselement 3a und einem an jedem Möbelmodul 2 befestigten zweiten Antriebselement 3b vorgesehen. Das erste Antriebselement 3a wirkt mit dem zweiten Antriebselement 3b zusammen, so dass jedes Möbelmodul 2 individuell mittels des Linearantriebs in Zusammenwirkung mit dem eigenen Motor 8 verfahrbar ist. Der Steuerungsrechner weist für die Steuerung einer Geschwindigkeit jedes Möbelmoduls 2 einen Motorcontroller 12 und einen mit dem Motor 8 gekoppelten ersten Encoder 9 zur Regelung einer Drehzahl des Motors 8 auf. Der Motorcontroller 12 ist mit dem ersten Encoder 9 elektrisch verbunden. Der Motorcontroller 12 erfüllt die Zertifizierung für Norm IEC 60335-1 in der am Anmeldetag dieser Anmeldung gültigen Fassung.

Das erste Antriebselement 3a ist in diesem Beispiel eine Zahnstange 3a und das zweite Antriebselement 3b ein Ritzel 3b, der mit der Zahnstange 3a in Eingriff steht. Zum Verfahren des Möbelmoduls 2 ist der Ritzel 3b mit dem Motor gekoppelt.

Weiter ist zwischen Linearantrieb und Motor 8 eine mechanische Kraftbegrenzung, insbesondere eine Drehmomentbegrenzung, insbesondere eine Rutschkupplung, zwischengeschaltet. Die mechanische Kraftbegrenzung ist derart ausgestaltet, dass sie die Verbindung zwischen Motor 8 und Linearantrieb trennt, sobald ein vordefiniertes Drehmoment anliegt. Diese Sicherheitskupplung trägt dem Umstand Rechnung, dass sich beispielsweise ein Benutzer zwischen zwei benachbarten Modulen 2 befindet, während diese aufeinander zu bewegt werden. Sobald ein Modul auf ein Hindernis trifft, kommt die Rutschkupplung zum Einsatz, die den Motor 8 vom Linearantrieb trennt. Dabei wird die Kraftgrenze, bei der die Kupplung auslösen soll, mechanische eingestellt. Jedenfalls wird hier ein Wert eingestellt, bei dem keine ernsthaften Verletzungen der Bedienperson auftreten können und der den geltenden Sicherheitsbestimmungen entspricht. Der Steuerungsrechner 10 ist zur Erkennung einer Trennung der Verbindung zwischen Linearantrieb und Motor 8 mittels der mechanischen Kraftbegrenzung 6 derart ausgestaltet, dass er kontinuierlich oder in vordefinierten Zeitintervallen die Drehzahl des Motors 8 mit dem Positionssignal des zweiten Encoders vergleicht und überprüft ob eine Abweichung über einem vordefinierten Schwellwert liegt. Hat sich die Position nicht oder nur geringfügig geändert und dreht der Motor (im Leerlauf) weiter, so kann dies vom Steuerungsrechner 10 als Entkopplung des Motors 8 vom Linearantrieb gedeutet werden. Als Reaktion kann der Steuerungsrechner den Motor 8 abschalten und die von der Positionserkennung gelieferte Stillstandposition speichern.

Die Positionserkennung wird mit einem System zur absoluten Wegmessung durchgeführt. Dafür ist im modularen Möbelsystem 1 für jedes Modul ein Seilzugsensorsystem vorgesehen, welches einen an einem fixen Referenzpunkt befestigtes Seil umfasst. Ferner umfasst es an jedem Möbelmodul 2 einen mit dem Seil zusammenwirkenden Seilzugsensor mit einem zweiten Encoder zur Ausgabe eines Positionssignals, das sich aus dem Ab- bzw. Aufrollen des Seils während der Bewegung des Moduls 2 ergibt.

Die Beschleunigung ist innerhalb gewisser Grenzen einstellbar; die Schranken der Wahl der Beschleunigung sind durch das Auslösedrehmoment der Rutschkupplung 6 gegeben, d.h. das Beschleunigungsdrehmoment muss unter dem Auslösedrehmoment der Rutschkupplung 6 liegen. Im Falle der Auslösung der Rutschkupplung 6aufgrund eines Hindernisses wird beim nächsten Anfahren des Moduls eine tiefe lineare Beschleunigung durchgeführt, bis eine Verschiebung des Moduls 2 mittels des Positionssensors detektiert wird (Einrasten der Rutschkupplung).

Beim Bremsen eines Moduls 2 wird zwischen einem normalen Bremsvorgang und einem Notbremsvorgang unterschieden. Der Steuerungsrechner 10 macht diese Unterscheidung basierend auf bestimmte Signale die er empfängt. Wurde ein Notstopp vom Benutzer initiiert, so wird das Modul 2 um ein Vielfaches schneller gebremst, als bei einem normalen Stoppvorgang beim Verstellen des Moduls 2. Im Falle dieses Sicherheitsbremsprofils wird nach der Detektion der Notstoppbedingung ausgelöst, wobei das Modul innerhalb einer kurzen Strecke zum Halten kommen muss. Daher wird in diesem Fall vorzugsweise aktiv gebremst. Beim normalen Bremsvorgang wird die Bremsung unmittelbar nach Detektion einer entsprechenden Bedingung angestossen, wobei linear auf 0 cm/s gebremst wird. Selbstverständlich sind die Beschleunigungs- und Bremswerte einstellbar und können je nach zu hinterlegenden Strecken für das Modul 2 und je nach Modulgewicht angepasst werden.

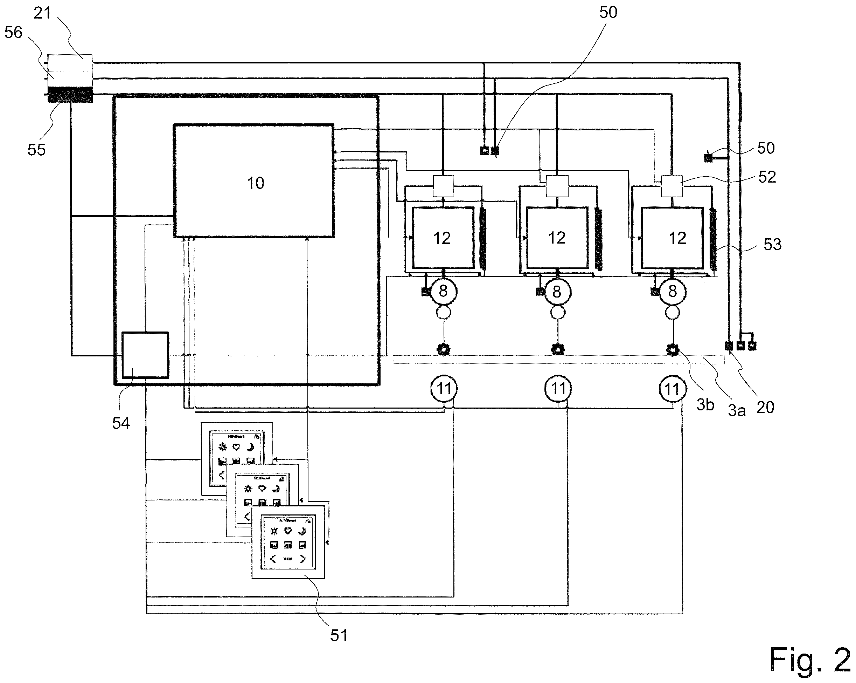

Bevorzugt umfasst jedes Möbelmodul 2 einen optoelektronischen Sensor 13a, insbesondere ein Lichtgitter 13b, zur Detektion eines Hindernisses beim Verfahren des Möbelmoduls 2. Der optoelektronische Sensor 13a umfasst mindestens eine Lichtquelle und mindestens einen Empfänger und ist zur Abdeckung der gesamten Breite des Möbelmoduls 2 ausgelegt, was in Fig. 1 durch die divergierenden Linien 13b illustriert ist. Dabei ragen die Lichtquelle und der Empfänger von einer Front- oder Rückseite des Möbelmoduls 2 weg und sind jeweils mittels einer (nicht gezeigten) Feder gehalten, so dass sie beim Kollidieren mit einem Objekt bzw. beim Zusammenführen mit einem benachbarten Modul entgegen der Federkraft in eine dafür vorgesehene Nische eindrückbar sind und nicht mehr aus dem Möbelmodul 2 hinausragen, was ebenfalls eine Detektion auslöst. Die Nische für den optoelektronischen Sensor 13a ist in Fig. 1 durch die Aussparung hinter dem mit 13a gekennzeichneten Balken gezeigt. Ergänzend zum optoelektronischen Sensor ist für jedes Möbelmodul 2 mindestens ein Drucksensor 52 (Fig. 2) vorgesehen. Der Drucksensor 52 ist im Bereich der einen, vorzugsweise der beiden in hin und zurück Fahrtrichtung gesehen vorderen Kante bzw. Kanten der Abstützunterlage 16a angeordnet. In Ausführungsformen des Möbelmoduls sind mehrere Drucksensoren entlang der Kante oder Kanten verteilt. Mittels des Drucksensors oder der Drucksensoren ist beim Kollidieren des Möbelmoduls 2 mit einem bodennahen Objekt, das eventuell vom Lichtgitter des optoelektronischen Sensors nicht erfasst werden kann, eine Detektion auslösbar. Im Kontext des vorliegenden Textes bedeutet eine solche Detektion dass anschliessend ein Notstopp des fahrenden Möbelmoduls eingeleitet wird.

Wie bereits erwähnt ist das Möbelsystem 1 elektrisch angetrieben. Im Falle einer Unterbrechung der Stromversorgung bzw. in einem Fehlerfall lässt sich jedes Möbelmodul 2 auch einzeln manuell steuern. Dazu lässt sich an jedem Möbelmodul 2 eine mechanische Kurbel koppeln, mittels welcher das Möbelmodul 2 manuell durch Drehen der Kurbel verfahrbar ist (nicht gezeigt).

Die Unterbrechung der Stromversorgung ist zusammenfassend dann vorgesehen, wenn die Stoppbedingung erfüllt ist, d.h. wenn
a. ein benutzerseitiger Stoppbefehl, oder
b. ein Signal des Erreichens der Endposition vom Steuerrechner 10 empfangen wird,
   oder wenn die Notstoppbedingung erfüllt ist, d.h. wenn
c. ein Signal dass ein Hindernis im Weg eines der Möbelmodule 2 als Gegenkraft zur Antriebskraft des Möbelmoduls 2 auftritt und die mechanische Kraftbegrenzung eine Unterbrechung der Verbindung zwischen Motor 8 und Linearantrieb durchführt, vom Steuerrechner 10 empfangen wird,
d. ein Signal dass ein Hindernis ohne Gegenkraft in das Lichtgitter des optoelektronischen Sensors eines der Möbelmodule 2 eingetreten ist, vom Steuerungsrechner 10 empfangen wird, oder
e. ein Signal dass ein Hindernis mit dem Drucktaster oder Druckschalter kollidiert, vom Steuerungsrechner 10 empfangen wird.

**Fig. 2** zeigt eine schematische Schaltdarstellung des erfindungsgemässen Möbelsystems 1 aus Fig. 1 in einer typischen Konfiguration, integriert in einer Wohnung. Das Möbelsystem 1 umfasst mehrere Möbelmodule, die in der Figur durch ihre jeweiligen zugeordneten Motorcontroller 12 illustriert sind. Jedes Möbelmodul hat ein Relais 52 welches die Stromversorgung des Möbelmoduls unterbricht wenn die Stoppbedingung oder die Notstoppbedingung erfüllt ist.

In der Figur sind auch der Steuerungsrechner 10, der Linearantrieb, der Positionssensor 11 und der Motor 8 mit dem Motorcontroller 12 gezeigt. Ferner sind die elektrischen Verbindungen mit dem Steuerungsrechner und der Stromversorgung gezeigt. Dabei handelt es sich um Verbindungen für Signale zur Positionierung der Möbelmodule und um sicherheitsrelevante Signale, die z.B. mit allfälligen Hindernissen beim Verfahren der Module 2 einhergehen. Dabei ist ein 230 V Spannungsversorgungsnetz 56 für den Anschluss von Geräten, z.B. eine Arbeitstisch- oder Leselampe, ein TV-Gerät, etc. der Möbelmodule 2 vorgesehen. Weiter ist ein zweites 230 V Spannungsversorgungsnetz 55 für die Komponenten des Möbelsystems 1 vorgesehen, beispielsweise für die Netzversorgung 54 des Steuerungsrechners 10, für die Motoren 68, etc. Das System umfasst weiter Steckdosen 20 und eine Netzwerkanbindung 21 für den Benutzer. Die Netzwerkanbindung 21 ist einerseits dazu vorgesehen, dem Benutzer Internetzugriff zu ermöglichen. Ferner kann dadurch das Möbelsystem vom Benutzer selbst ferngesteuert werden.

Beispielsweise kann der Benutzer mit seinem Smartphone bevor er nach Hause kommt eine bestimmte Möbelkonfiguration einstellen und diese an das Möbelsystem 1 schicken, welches daraufhin die Module entsprechend selbstständig verfährt. Dazu umfasst der Steuerungsrechner 10 weiter eine Kommunikationsschnittstelle für den Austausch von Daten mit dem Benutzer, unabhängig davon ob diese Daten von einem Ferngerät oder durch direkte Bedienung der Kommunikationsschnittstelle stammen. Der Steuerungsrechner 10 sendet Statusinformationen mittels der Kommunikationsschnittstelle als Antwort an das mobile Kommunikationsgerät. Die vordefinierten Konfigurationen der Möbelmodule 2 können mittels der Kommunikationsschnittstelle insbesondere mit einem einzigen, einer bestimmten Konfiguration zugeordneten Konfigurationsbefehl angefahren werden. In Ausführungsformen umfasst der Konfigurationsbefehl eine Anzahl von Unterbefehlen, die mehrere Möbelmodule 2 in einer bestimmten Reihenfolge verfahren. Die voreingestellten Konfigurationen können z.B. Kochen, Schlafen, Arbeiten sein, wobei der Benutzer zwischen diesen per einmaligem Knopfdruck schalten kann und die Möbelmodule 2 entsprechend verfahren werden. Dabei können die einzelnen Module nicht nur eigenständig mittels eines einzigen Knopfdrucks verfahren werden, sondern es ist auch möglich, Zwischenpositionen eines Moduls 2 anzusteuern, indem eine entsprechende "Links-" oder "Rechtstaste" bis zur gewünschten Position gedrückt gehalten wird. Die Tasten können auch losgelassen werden und das Möbel fährt bis zum nächsten Anschlag (Möbel oder Wand) und schaltet selbstständig ab.

Eine Benutzerschnittstelle 51 ist in jedem Möbelmodul integriert, was den Komfort erhöht. Vorzugsweise umfasst jede Benutzerschnittstelle 51 einen Bildschirm, vorzugsweise einen Touchscreen oder eine Folientastatur mit Steuerungstasten. Die Benutzerschnittstelle dient der direkten Interaktion mit dem Benutzer während die genannte Kommunikationsschnittstelle zur Fernkommunikation verwenden wird. Zum Beispiel kann die Benutzerschnittstelle in Ausführungsformen Mittel zur Spracherkennung umfassen und kann per Sprachbefehl mittels eines Audiomoduls für Audioempfang und Spracherkennungssoftware des Steuerungsrechners 10 verfahren werden, wobei Sprachbefehle des Benutzers vom Steuerungsrechner 10 Maschinenbefehlen zugeordnet werden und diese ausgeführt werden. Alternativ oder zusätzlich kann die Benutzerschnittstelle in Ausführungsformen Mittel zur Gestensteuerung umfassen und per Gestensteuerung mittels eines Videomoduls für Videoempfang verfahren werden, wobei Gestenbefehle des Benutzers vom Steuerungsrechner 10 Maschinenbefehlen zugeordnet werden und diese ausgeführt werden. In Ausführungsformen kann der Steuerungsrechner dazu ausgestaltet sein, mittels der Sprach- oder Gestenerkennung auch einzelne steuerbare Elemente des Möbelsystems 1 zu steuern, z.B. eine Arbeitstisch- oder Leselampe, ein TV-Gerät, etc. ein- und ausschalten. Beispielsweise kann ein Sprachbefehl "Leselampe an" heissen, woraufhin der Steuerungsrechner die Leselampe einschaltet.

Ferner kann jedes Möbelmodul einen Näherungssensor haben, so dass die Benutzerschnittstelle aktiviert wird, wenn sich dieser nähert und nach einer inaktiven Zeitspanne selbst deaktiviert. Dies erhöht auch den Komfort und spart Strom. Dabei wird vorzugsweise ein Näherungssensor für den Nahbereich des Bildschirms gewählt, so dass dieser nur dann auslöst, wenn die Hand des Benutzers sehr nah am Sensor ist. Damit wird verhindert dass sich der Bildschirm unbeabsichtigt einschaltet, etwa beim Vorbeigehen.

Der Steuerungsrechner umfasst ausser Software für die Steuerung der Möbelmodulkonfiguration auch Software zur Änderung von Parametern und Einstellung verschiedener Grössen, was nachfolgend erläutert wird. Dabei handelt es sich um Systemparameter die im Normalfall nicht durch den Benutzer veränderbar sind und nur vom technischen Fachpersonal, z. B. im Rahmen eines Firmware-Updates, geändert werden können.

Für das Anfahren eines Möbelmoduls 2 wird eine lineare Beschleunigung mittels des Steuerungsrechners 10 eingestellt. Dabei wird vorzugsweise ein maximaler Beschleunigungswert bis zu einer festen Endgeschwindigkeit vorgegeben, der unter eine Auslöseschwelle der mechanischen Kraftbegrenzung liegt.

Für das Abbremsen des Möbelmoduls 2 wird derart mittels des Steuerungsrechners 10 gesteuert, dass das Möbelmodul 2 nach einer vordefinierten Strecke zum Stillstand kommt. Je nach Bremsursache wird ein Sicherheitsbremsprogramm ausgeführt, bei dem das Möbelmodul 2 innerhalb einer bestimmten Strecke aktiv gebremst wird, oder es wird ein Komfortbremsprogramm ausgeführt, bei dem das Möbelmodul 2 linear in einer vorgegebenen Zeit zum Stillstand kommt. Typischerweise kommt das Komfortbremsprogramm zum Tragen, wenn ein Möbelmodul im Rahmen einer Konfigurationsänderung bewegt wurde. Hingegen führt der Steuerungsrechner das Sicherheitsbremsprogramm aus, wenn ein Notstopp ausgelöst wurde oder ein Hindernis beim Verfahren detektiert wurde. Alle Bewegungen des Möbelsystems werden mittels des Steuerungsrechners 10 gestoppt, wenn eine entsprechende Taste in der Bedienungsschnittstelle gedrückt wird, und/oder wenn ein Hindernis im Weg eines der Möbelmodule 2 als Gegenkraft zur Antriebskraft des Möbelmoduls 2 auftritt und die mechanische Kraftbegrenzung anspricht, oder ohne Krafteinwirkung wenn ein Hindernis im Weg eines Möbelmoduls 2 mittels einer Lichtschranke des Möbelmoduls 2 detektiert wird. Mit anderen Worten verwendet der Steuerungsrechner für das Verfahren und Positionieren der Möbelmodule und für Sicherheitsaspekte eine Vielzahl von unterschiedlichen Sensoren des Möbelsystems.

Das Möbelsystem 1 kann vorzugsweise auch in Hausautomationssystemen integriert werden, wobei zu diesem Zweck entsprechenden Schnittstellen am Steuerungsrechner 10 vorgesehen sind. Damit ist z.B. eine Ferndiagnose im Fehlerfall bequem zur Fehlerermittlung abrufbar.

Im Gegensatz zu herkömmlichen Lösungen, bei den ein Möbelstück oder Möbelsystem manuell oder motorunterstützt manuell (Taste bis zum Stillstand gedrückt halten) bewegt wird, hat das erfindungsgemässe Steuerungsverfahren unter anderem den wesentlichen Vorteil dass es ein vom Benutzer unabhängiges Verfahren der Möbelmodule erlaubt. Dies erhöht den Komfort für den Benutzer, da er beim Ändern der Konfiguration der Möbelmodule nicht anwesend bzw. nur am Anfang tätig werden muss. Neben der Fernsteuerungsmöglichkeit ist dieser Vorteil auch zuhause spürbar; da das Möbelsystem feste, nicht verfahrbare Räume umfasst (Küche, Bad), kann der Benutzer beispielsweise eine Dusche nehmen während das Möbelsystem die Konfiguration selbstständig ändert.

Obwohl bevorzugte Ausführungsformen der Erfindung beschrieben worden sind wird darauf hingewiesen, dass die Erfindung auf anderen Weisen im Rahmen der nachfolgenden Ansprüchen realisiert werden kann. Dabei beziehen sich in der Beschreibung verwendete Begriffe wie "bevorzugt", "insbesondere", "vorteilhaft", etc. nur auf optionale und beispielhafte Ausführungsformen.

## Patentansprüche

1. Steuerungsverfahren zum Steuern eines modularen Möbelsystems (1) mit mindestens zwei in einem Raum elektrisch und unabhängig voneinander verfahrbaren Möbelmodulen (2), wobei das Möbelsystem (1) einen Steuerungsrechner (10) mit mindestens einer Bedienungsschnittstelle für den Benutzer umfasst, und wobei jedes Möbelmodul (2) mittels eines eigenen Motors (8) elektrisch angetrieben wird, wobei ein Linearantrieb vorgesehen ist, mittels welchem jedes Möbelmodul (2) individuell in Zusammenwirkung mit dem eigenen Motor (8) verfahrbar ist, wobei jedes Möbelmodul (2) weiter ein Seilzugsensorsystem zur Positionserkennung umfasst, wobei zwischen Motor (8) und Linearantrieb eine mechanische Kraftbegrenzung (6) zwischengeschaltet ist,
wobei das Verfahren jedes Möbelmoduls (2) unabhängig von den anderen Möbelmodulen (2) mittels des Steuerungsrechners (10) gesteuert wird und das Möbelmodul (2) mittels seines Motors (8) dann verfahren wird, wenn der Steuerungsrechner (10) einen benutzerseitigen Auslösebefehl empfangen hat, wobei das betreffende Möbelmodul (2) vom Steuerungsrechner (10) ohne weitere benutzerseitige Einwirkung und unter Einbeziehung eines Positionssignals des Seilzugsensorsystems bis zum Erreichen einer Endposition gesteuert wird, und
wobei das betreffende Möbelmodul (2) dann angehalten wird, wenn eine Stoppbedingung oder eine Notstoppbedingung erfüllt ist.

2. Steuerungsverfahren nach Anspruch 1, wobei die Stoppbedingung erfüllt ist, wenn
a. ein benutzerseitiger Stoppbefehl, oder
b. ein Signal des Erreichens der Endposition vom Steuerrechner (10) empfangen wird, und die Notstoppbedingung erfüllt ist, wenn
c. ein Signal dass ein Hindernis im Weg eines der Möbelmodule (2) als Gegenkraft zur Antriebskraft des Möbelmoduls (2) auftritt und die mechanische Kraftbegrenzung eine Unterbrechung der Verbindung zwischen Motor (8) und Linearantrieb durchführt, vom Steuerrechner (10) empfangen wird.

3. Steuerungsverfahren nach Anspruch 1 oder 2, wobei zur Erkennung der Trennung der Verbindung zwischen Motor (8) und Linearantrieb der Steuerungsrechner (10) kontinuierlich oder in vordefinierten Zeitintervallen eine Drehzahl des Motors (8) mit dem Positionssignal vergleicht und eine Trennung der Verbindung erkennt wenn die Position des Möbelmoduls (2) bei drehendem Motor (8) unverändert bleibt.

4. Steuerungsverfahren nach Anspruch 1 oder 2, wobei zu einem ferngesteuerten Verfahren eines oder mehrerer Möbelmodule (2) eine Kommunikationsschnittstelle für den Steuerungsrechner (10) vorgesehen ist, wobei von einem mobilen Kommunikationsgerät des Benutzers gesendete Benutzerbefehle von der Kommunikationsschnittstelle empfangen werden und wobei Statusinformationen von der Kommunikationsschnittstelle als Antwort an das mobile Kommunikationsgerät gesendet werden.

5. Steuerungsverfahren nach einem der vorangehenden Ansprüche, wobei ein oder mehrere Möbelmodule (2) per Sprachbefehl mittels eines Audiomoduls für Audioempfang und Spracherkennung des Steuerungsrechners (10) verfahren werden, wobei Sprachbefehle des Benutzers vom Steuerungsrechner (10) Maschinenbefehlen zugeordnet werden und diese ausgeführt werden und/oder wobei ein oder mehrere Möbelmodule (2) per Gestensteuerung mittels eines Videomoduls für Videoempfang verfahren werden, wobei Gestenbefehle des Benutzers vom Steuerungsrechner (10) Maschinenbefehlen zugeordnet werden und diese ausgeführt werden.

6. Steuerungsverfahren nach einem der vorangehenden Ansprüche, wobei vordefinierte Konfigurationen der Möbelmodule (2) mittels der Bedienungsschnittstelle insbesondere mit einem einzigen, einer bestimmten Konfiguration zugeordneten Konfigurationsbefehl angefahren werden, insbesondere wobei der Konfigurationsbefehl eine Anzahl von Unterbefehlen umfasst, die mehrere Möbelmodule (2) in einer bestimmten Reihenfolge verfahren.

7. Steuerungsverfahren nach einem der vorangehenden Ansprüche, wobei beim Anfahren eine lineare Beschleunigung eines Möbelmoduls (2) mittels des Steuerungsrechners (10) eingestellt wird, insbesondere wobei ein maximaler Beschleunigungswert bis zu einer festen Endgeschwindigkeit vorgegeben wird, der unter eine Auslöseschwelle der mechanischen Kraftbegrenzung liegt.

8. Steuerungsverfahren nach einem der vorangehenden Ansprüche, wobei eine Abbremsung des Möbelmoduls (2) derart mittels des Steuerungsrechners (10) gesteuert wird, dass das Möbelmodul (2) nach einer vordefinierten Strecke zum Stillstand kommt, wobei je nach Bremsursache ein Sicherheitsbremsprogramm ausgeführt wird, bei dem das Möbelmodul (2) innerhalb einer bestimmten Strecke aktiv gebremst wird, oder ein Komfortbremsprogramm ausgeführt wird, bei dem das Möbelmodul (2) linear in einer vorgegebenen Zeit zum Stillstand kommt.

9. Steuerungsverfahren nach einem der vorangehenden Ansprüche, wobei ein manuelles Verfahren eines Möbelmoduls (2) mittels einer Kurbel des Möbelmoduls (2) vom Steuerungsrechner (10) erkannt wird und daraufhin alle elektrischen Verfahrvorgänge vom Steuerungsrechner (10) angehalten werden.

10. Steuerungsverfahren nach einem der vorangehenden Ansprüche, wobei mittels eines oder mehreren Drucksensoren (52) jedes Möbelmoduls (2), insbesondere eines Drucktasters oder Druckschalters, beim Kollidieren des Möbelmoduls (2) mit einem bodennahen Objekt ein Signal zum Steuerungsrechner (10) geschickt wird, welches die Notstoppbedingung erfüllt, wobei der mindestens eine Drucksensor (13c) im Bereich der einen, insbesondere der beiden in hin und zurück Fahrtrichtung gesehen vorderen Kanten der Abstützunterlage (16a) angeordnet ist, insbesondere wobei mehrere Drucksensoren (52) entlang der Kante oder Kanten verteilt sind.

11. Steuerungsverfahren nach einem der vorangehenden Ansprüche, wobei beim Verfahren des Möbelmoduls 2 ein Hindernis mittels eines optoelektronischen Sensors (13a), insbesondere zur Erzeugung eines Lichtgitters (13b), ohne Krafteinwirkung detektiert wird, wenn das Hindernis im Lichtgitter eintritt, wobei ein Signal zum Steuerungsrechner (10) geschickt wird, welches die Notstoppbedingung erfüllt.

12. Steuerungsverfahren nach einem der vorangehenden Ansprüche, wobei bei einem Notstopp kein nachfolgendes Anfahren irgendeines Möbelmoduls (2) vom Steuerungsrechner (10) erlaubt wird, bis die Notstoppbedingung vom Benutzer aufgehoben wurde.

13. Computerprogrammprodukt welches, wenn in einem Steuerungsrechner (10) eines modulares Möbelsystems mit mindestens einem in einem Raum elektrisch und unabhängig voneinander verfahrbaren Möbelmodulen (2) geladen, das Verfahren nach einem der vorangehenden Ansprüchen ausführt.

## Claims

1. Control method for controlling a modular furniture system (1) with at least two furniture modules (2) which can be moved electrically and independently of one another in a room, the furniture system (1) comprising a control computer (10) with at least one control interface for the user, wherein each furniture module (2) is driven electrically by means of its own motor (8), wherein a linear drive is provided, by means of which each furniture module (2) can be moved individually in cooperation with its own motor (8), wherein each furniture module (2) further comprises a cable tension sensor system for position detection, wherein a mechanical force limiter (6) is interposed between the motor (8) and the linear drive,
wherein the movement of each furniture module (2) is controlled independently of other furniture modules (2) by means of the control computer (10) and the furniture module (2) is moved by means of its motor (8) when the control computer (10) has received a trigger command from the user side, wherein the relevant furniture module (2) is controlled by the control computer (10) without further influence on the user side and by including a position signal from the cable tension sensor system until an end position is reached, and
wherein the relevant furniture module (2) is stopped when a stop condition or emergency stop condition is fulfilled.

2. Control method according to claim 1, wherein the stop condition is fulfilled when
a. a user stop command, or
b. an end position reach signal is received from the control computer (10), and the emergency stop condition is met when
c. a signal indicating that an obstacle in the path of one of the furniture modules (2) occurs as a counterforce to the driving force of the furniture module (2) and the mechanical force limiter effects an interruption of the connection between the motor (8) and the linear drive, is received by the control computer (10) .

3. Control method according to claim 1 or 2, wherein, in order to detect disconnection of the connection between the motor (8) and the linear drive, the control computer (10) compares a rotational speed of the motor (8) with the position signal continuously or at predefined time intervals and detects a disconnection of the connection if the position of the furniture module (2) remains unchanged when the motor (8) is running.

4. Control method according to claim 1 or 2, wherein a communication interface for the control computer (10) is provided for remotely controlling the movement of one or more furniture modules (2), wherein user commands sent by a mobile communication device of a user are received by the communication interface, and wherein status information is sent from the communication interface to the mobile communication device in response.

5. Control method according to one of the preceding claims, wherein one or more furniture modules (2) are moved by voice command by means of an audio module for audio reception and voice recognition of the control computer (10), in which voice commands of the user are assigned to machine commands by the control computer (10) and these are executed and/or wherein one or more furniture modules (2) are moved by means of a video module for video reception by means of gesture commands, in which gesture commands of the user are assigned to machine commands by the control computer (10) and these are executed.

6. Control method according to one of the preceding claims, wherein predefined configurations of the furniture modules (2) are triggered by means of the control interface for the user, in particular with a single configuration command associated with a specific configuration, in particular wherein the configuration command comprises a number of sub-commands which move a plurality of furniture modules (2) in a specific order.

7. Control method according to one of the preceding claims, wherein a linear acceleration of a furniture module (2) is set by means of the control computer (10) during start-up, in particular wherein a maximum acceleration value is preset up to a fixed final speed which lies below a trigger threshold of the mechanical force limiter.

8. Control method according to one of the preceding claims, wherein the braking of the furniture module (2) is controlled by means of the control computer (10) in such a way that the furniture module (2) comes to a standstill after a predefined distance, wherein, depending on the cause of the braking, a safety braking program is executed, in which the furniture module (2) is actively braked over a predefined distance, or a comfort braking program is executed, in which the furniture module (2) comes to a linear standstill within a predefined time.

9. Control method according to one of the preceding claims, wherein a manual movement of a furniture module (2) by means of a crank of the furniture module (2) is detected by the control computer (10) and all electrical movements are then stopped by the control computer (10).

10. Control method according to one of the preceding claims, wherein a signal is sent to the control computer (10) by means of one or more pressure sensors (52) of each furniture module (2), in particular a push button or a pressure switch, when the furniture module (2) collides with an object close to the ground, which fulfils the emergency stop condition, wherein the at least one pressure sensor (13c) is arranged in the region of one, in particular both, front edges of the support base (16a), seen in the direction of forward and return travel, in particular wherein several pressure sensors (52) are distributed along the edge or edges.

11. Control method according to one of the preceding claims, wherein, during the movement of the furniture module (2), an obstacle is detected by means of an optoelectronic sensor (13a), in particular for generating a light grid (13b), without the action of a force, when the obstacle enters the light grid, wherein a signal is sent to the control computer (10) which satisfies the emergency stop condition.

12. Control method according to one of the preceding claims, wherein, in the event of an emergency stop, no subsequent start-up of a furniture module (2) is permitted by the control computer (10) until the emergency stop condition has been removed by the user.

13. Computer program product which, when loaded into a control computer (10) of a modular furniture system with at least one furniture module (2) which can move electrically and independently of one another in a room, executes the method according to one of the preceding claims.

## Revendications

1. Procédé de commande pour commander un système de meubles modulaire (1) avec au moins deux modules de meubles (2) qui peuvent être déplacés électriquement et indépendamment l'un de l'autre dans une pièce, le système de meubles (1) comprenant un ordinateur de commande (10) avec au moins une interface de commande pour l'utilisateur, et chaque module de meubles (2) étant entraîné électriquement au moyen de son propre moteur (8), dans lequel un entraînement linéaire est prévu, au moyen duquel chaque module de meubles (2) peut être déplacé individuellement en coopération avec son propre moteur (8), dans lequel chaque module de meubles (2) comprend en outre un système de capteur de tension de câble pour la détection de la position, dans lequel un limiteur de force mécanique (6) est interposé entre le moteur (8) et l'entraînement linéaire,
dans lequel le déplacement de chaque module de meubles (2) est commandé indépendamment des autres modules de meuble (2) au moyen de l'ordinateur de commande (10) et le module de meubles (2) est déplacé au moyen de son moteur (8) lorsque l'ordinateur de commande (10) a reçu un ordre de déclenchement côté utilisateur, dans lequel le module de meuble concerné (2) est commandé par l'ordinateur de commande (10) sans autre influence côté utilisateur et en incluant un signal de position du système de capteur de tension de câble jusqu'à ce qu'une position finale soit atteinte, et
dans lequel le module de meubles concerné (2) est arrêté lorsqu'une condition d'arrêt ou une condition d'arrêt d'urgence est remplie.

2. Procédé de commande selon la revendication 1,
dans lequel la condition d'arrêt est remplie lorsque
a. une commande d'arrêt de l'utilisateur, ou
b. un signal d'atteinte de la position finale est reçu de l'ordinateur de commande (10), et la condition d'arrêt d'urgence est remplie lorsque
c. un signal indiquant qu'un obstacle sur le chemin de l'un des modules de meubles (2) se produit en tant que contre-force à la force d'entraînement du module de meubles (2) et le limiteur de force mécanique effectue une interruption de la connexion entre le moteur (8) et l'entraînement linéaire, est reçu par l'ordinateur de commande (10).

3. Procédé de commande selon la revendication 1 ou 2, dans lequel pour détecter la déconnexion de la connexion entre le moteur (8) et l'entraînement linéaire, l'ordinateur de commande (10) compare une vitesse de rotation du moteur (8) avec le signal de position en continu ou à des intervalles de temps prédéfinis et détecte une déconnexion de la connexion si la position du module de meubles (2) reste inchangée lorsque le moteur (8) tourne.

4. Procédé de commande selon la revendication 1 ou 2, dans lequel une interface de communication pour l'ordinateur de commande (10) est prévue pour commander à distance le mouvement d'un ou plusieurs modules de meubles (2), dans lequel des commandes d'utilisateur envoyées par un dispositif de communication mobile d'un utilisateur sont reçues par l'interface de communication, et dans lequel des informations d'état sont envoyées de l'interface de communication au dispositif de communication mobile en réponse.

5. Procédé de commande selon l'une des revendications précédentes, dans lequel un ou plusieurs modules de meubles (2) sont déplacés par commande vocale au moyen d'un module audio pour la réception audio et la reconnaissance vocale de l'ordinateur de commande (10), dans lequel des commandes vocales de l'utilisateur sont attribuées à des commandes machine par l'ordinateur de commande (10) et celles-ci sont exécutées et/ou dans lequel un ou plusieurs modules de meubles (2) sont déplacés par commande gestuelle au moyen d'un module vidéo pour la réception vidéo, dans lequel des commandes gestuelles de l'utilisateur sont attribuées à des commandes machine par l'ordinateur de commande (10) et celles-ci sont exécutées.

6. Procédé de commande selon l'une des revendications précédentes, dans lequel des configurations prédéfinies des modules de meubles (2) sont déclenchées au moyen de l'interface de commande pour l'utilisateur, en particulier avec une seule commande de configuration associée à une configuration spécifique, en particulier dans lequel la commande de configuration comprend un certain nombre de sous-commandes qui déplacent une pluralité de modules de meubles (2) dans un ordre spécifique.

7. Procédé de commande selon l'une des revendications précédentes, dans lequel une accélération linéaire d'un module de meubles (2) est réglée au moyen de l'ordinateur de commande (10) lors du démarrage, en particulier dans lequel une valeur d'accélération maximale est prédéfinie jusqu'à une vitesse finale fixe qui se situe en dessous d'un seuil de déclenchement du limiteur de force mécanique.

8. Procédé de commande selon l'une des revendications précédentes, dans lequel le freinage du module de meubles (2) est commandé au moyen de l'ordinateur de commande (10) de telle sorte que le module de meubles (2) s'immobilise après une distance prédéfinie, dans lequel, en fonction de la cause du freinage, un programme de freinage de sécurité est exécuté, dans lequel le module de meubles (2) est freiné activement sur une distance prédéfinie, ou un programme de freinage de confort est exécuté, dans lequel le module de meubles (2) s'immobilise linéairement dans un temps prédéfini.

9. Procédé de commande selon l'une des revendications précédentes, dans lequel un déplacement manuel d'un module de meubles (2) au moyen d'une manivelle du module de meubles (2) est détecté par l'ordinateur de commande (10) et tous les déplacements électriques sont alors arrêtés par l'ordinateur de commande (10).

10. Procédé de commande selon l'une des revendications précédentes, dans lequel un signal est envoyé à l'ordinateur de commande (10) au moyen d'un ou de plusieurs capteurs de pression (52) de chaque module de meubles (2), en particulier un bouton poussoir ou un interrupteur à pression, lorsque le module de meubles (2) entre en collision avec un objet proche du sol, qui remplit la condition d'arrêt d'urgence, le au moins un capteur de pression (13c) étant disposé dans la zone d'un, en particulier des deux, bords avant de la base de support (16a), vu dans le sens de déplacement aller et retour, en particulier plusieurs capteurs de pression (52) étant répartis le long du ou des bords.

11. Procédé de commande selon l'une des revendications précédentes, dans lequel, pendant le déplacement du module de meubles (2), un obstacle est détecté au moyen d'un capteur optoélectronique (13a), en particulier pour générer une grille lumineuse (13b), sans l'action d'une force, lorsque l'obstacle pénètre dans la grille lumineuse, un signal étant envoyé à l'ordinateur de commande (10) qui satisfait à la condition d'arrêt d'urgence.

12. Procédé de commande selon l'une des revendications précédentes, dans lequel, en cas d'arrêt d'urgence, aucun démarrage ultérieur d'un module de meubles (2) n'est autorisée par l'ordinateur de commande (10) tant que la condition d'arrêt d'urgence n'a pas été supprimée par l'utilisateur.

13. Produit de programme informatique qui, lorsqu'il est chargé dans un ordinateur de commande (10) d'un système de meubles modulaires comportant au moins un module de meubles (2) pouvant se déplacer électriquement et indépendamment l'un de l'autre dans une pièce, exécute le procédé selon l'une des revendications précédentes.
